(19) Europäisches Patentamt European Patent Office Office européen des brevets

(11) **EP 2 629 968 B1**

(12) **EUROPEAN PATENT SPECIFICATION**

(45) Date of publication and mention
of the grant of the patent:
**07.09.2016 Bulletin 2016/36**

(21) Application number: **11799818.7**

(22) Date of filing: **20.10.2011**

(51) Int Cl.:
**B29D 30/72** (2006.01)   **B60C 13/00** (2006.01)
**B60C 13/04** (2006.01)   **C08K 3/04** (2006.01)
**C08K 3/08** (2006.01)   **C08K 3/34** (2006.01)
**C08K 5/098** (2006.01)   **C08L 23/28** (2006.01)

(86) International application number:
**PCT/IB2011/054703**

(87) International publication number:
**WO 2012/052966 (26.04.2012 Gazette 2012/17)**

(54) **METHOD OF COLOURING PORTIONS OF A TYRE AND TYRE OBTAINED BY THE METHOD**

VERFAHREN ZUM FÄRBEN VON REIFENTEILEN UND ANHAND DES VERFAHRENS
HERGESTELLTER REIFEN

PROCÉDÉ DE COLORATION DE PARTIES D'UN PNEU ET PNEU OBTENU PAR CE PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.10.2010 IT TO20100850**

(43) Date of publication of application:
**28.08.2013 Bulletin 2013/35**

(73) Proprietor: **Bridgestone Corporation
Tokyo 104-8340 (JP)**

(72) Inventors:
• **COTUGNO, Salvatore
  I-00131 Roma (IT)**
• **ALMI, Matteo, Simone
  I-20138 Milano (IT)**
• **GRUARIN, Martina
  I-00121 Roma (IT)**
• **PERTUSIO, Giovanni, Alessandro
  I-00146 Roma (IT)**

(74) Representative: **Marchetti, Alessio
  Bridgestone Technical Center Europe S.p.A.
  Via Fosso del Salceto, 13/15
  00128 Roma (IT)**

(56) References cited:
EP-A2- 2 222 776        WO-A2-2008/002744
US-A- 4 461 795         US-A- 4 857 397
US-A- 5 320 874         US-A- 5 478 426
US-A- 5 603 796         US-A- 6 030 676
US-A1- 2006 207 708

**EP 2 629 968 B1**

**Description**

TECHNICAL FIELD

The present invention relates to a method of colouring portions of a tyre.

BACKGROUND ART

In the tyre industry, demand has arisen over the past few years for coloured tyre portions, for various, not least of all decorative, reasons.

Known methods to date are based on colouring rubber mixes with appropriate pigments.

US 6,030,676 discloses a decorative laminate for a tyre that consists of a first aqueous layer, a pigment layer and a transparent covering layer. The most commonly used methods basically employ three layers : a connecting layer on the inner layers of the tyre; a coloured layer produced from the coloured mix; and an outer cover layer, which is removed prior to sale.

These methods are flawed by premature degradation of the coloured portion, mainly due to chemical agents migrating to it from the inner layers of the tyre. To preserve the coloured portion longer, a common practice is to increase the thickness of the coloured layer, to slow down migration of the chemical agents, but this poses other problems in terms of increased heat generation and, therefore, rolling resistance.

Attention is also drawn to EP 2 222 776 B1 which discloses a water-based cement for tyres providing an improved adhesion to rubber.

DISCLOSURE OF INVENTION

It is an object of the present invention to provide a method of colouring portions of a tyre, designed to eliminate the drawbacks of the known art.

BEST MODE FOR CARRYING OUT THE INVENTION

According to the present invention, there is provided a method of colouring portions of a tyre; said method comprising the steps of :

- forming a highly impermeable protective layer by depositing an aqueous emulsion on a part of the tyre to be coloured; and
- depositing a coloured layer on said protective layer;

said method being characterized in that the aqueous emulsion comprises at least a cross-linkable polymer base, and a surfactant of molecular formula (I)

$$(R_1CONR_2CHR_3COO^-)nX^{n+} \qquad (I)$$

where :

$R_1$ is an aliphatic group $C_6$-$C_{23}$,
$R_2$ is H or an aliphatic group $C_1$-$C_8$,
$R_3$ is H or an aliphatic or aromatic group $C_1$-$C_8$,
X is a metal cation, preferably an alkaline cation, and
n is an integer of 1 to 3.

Preferably, the aliphatic group $R_1$ comprises a double bond.
Preferably, $X^{n+}$ is $Na^+$.
Preferably, the surfactant has a molecular formula in the group consisting of:

$$CH_3(CH_2)_7CHCH(CH_2)_7CONHCH_2COO^- \; X^+$$

$$CH_2CH(CH_2)_8CONHCH_2COO^- \; X^+$$

Preferably, the fillers are in the group comprising kaolin, clay, mica, feldspar, silica, graphite, bentonite, alumina, and carbon black.

Preferably, the cross-linkable polymer base comprises polymers with a Tg of over 0°C.

Preferably, the coloured layer is made of rubber.

Preferably, the method according to the present invention comprises a preliminary engraving step, in which said part of the tyre to be coloured is engraved using a laser.

The following are non-limiting examples for a clearer understanding of the invention.

EXAMPLES

The following is a description of the mixes used for the protective layers of the present invention.

All these mixes are highly impermeable, by employing high Tg polymers and/or large amounts of filler - in this case, clay.

Use of high Tg polymers and mineral fillers is made possible by the mixes being produced from aqueous emulsions comprising at least one surfactant of molecular formula (I). In the conventional Banbury mixer method, in fact, dispersing components such as high Tg polymers and mineral fillers can pose serious problems, which are normally solved by increasing mixing time and temperature. This, however, inevitably results in higher energy consumption, and in obvious repercussions in terms of pollution and cost. Being mixed in emulsion, the energy consumption of all the mixes according to the present invention, on the other hand, is independent of the type of components used.

The protective layers are therefore produced from the resulting mixes by depositing an aqueous emulsion on the part of the tyre, e.g. the sidewall, for colouring; and the then eliminating the water.

The aqueous emulsions are all produced by dispersing and mixing the mix components in water. More specifically, the emulsions were produced by dispersing all the ingredients shown in Table I simultaneously in 1 litre of water. The resulting aqueous dispersion was stirred mechanically for 30 minutes, then sonicated for 15 minutes to form an aqueous emulsion.

The above aqueous emulsion making process in no way constitutes a limitation of the present invention.

The emulsion was sprayed or brushed onto the sidewall of the tyre, and the water then eliminated to form a roughly 0.3 mm thick protective layer, to which a commercial, less than 1 mm thick, coloured rubber layer was applied - more specifically, a coloured rubber layer known by the trade name 'Rubber Label Reel Palomino' manufactured and marketed by VENETADECALCOGOMME srl.

The coloured rubber layer normally comprises sublayers : a first adhesive sublayer (laid, in use, on the protective layer); a second barrier sublayer; and a third rubber sublayer with the actual colouring. Though this coloured rubber layer structure may safely be used in the present invention, the adhesive and barrier sublayers are optional. That is, the coloured rubber layer may be defined solely by the rubber sublayer with the actual colouring.

The protective layer and coloured rubber layer may be crosslinked when or after curing the tyre, i.e. the colouring may be applied to cured or green tyres.

Colourfastness was tested to determine the advantages of the invention with respect to the known art.

A fade index ΔE was employed as established by the 1976 International Commission on Illumination and defined by the formula :

$$\Delta E = [(\Delta L)^2 + (\Delta a)^2 + (\Delta b)^2]^{1/2}$$

where :

L is luminosity; a is red-green light sensation; and b is yellow-blue light sensation. Measuring was performed using a Minolta CM 2002 spectrophotometer.

The effectiveness of the invention was tested by comparing the colour on the day the coloured portion was formed, with the colour aged artificially (to ASTM D4587, ISO 2810 and ISO 2813 Standards) to simulate exposure of the tyre to normal operating conditions. For the purpose of the comparison, the ΔE values were conveniently indexed assigning a value of 100 to a complete absence of fading.

Adhesion of the protective layer to the sidewall of the tyre was also tested to ASTM Standard D621.

In the following examples, two different surfactants (a, b) in the molecular formula (X) class were used :

- a surfactant (a) of molecular formula $CH_3(CH_2)_7CHCH(CH_2)_7CONHCH_2COO\ Na^+$
- a surfactant (b) of molecular formula $CH_2CH(CH_2)_8CONHCH_2COO^-\ Na^+$

Table I shows the compositions in phr of five mixes A-E produced from respective emulsions according to the present invention; and, alongside each composition, the relative fade value ΔE and adhesion to the tyre sidewall. In mixes A-E, the composition of the polymer base was altered using increasingly high Tg polymers.

TABLE I

| | A | B | C | D | E | F | G |
|---|---|---|---|---|---|---|---|
| Cl-IIR | 100 | 70 | 70 | 70 | 70 | 70 | 70 |
| CR | -- | 30 | -- | -- | -- | -- | -- |
| NR | -- | -- | 30 | -- | -- | -- | -- |
| SBR | -- | -- | -- | 30 | -- | -- | -- |
| PMA | -- | -- | -- | -- | 30 | -- | -- |
| PEMA | -- | -- | -- | -- | -- | 30 | -- |
| ABS | -- | -- | -- | -- | -- | -- | 30 |
| CARBON BLACK | 50 | 50 | 50 | 50 | 50 | 50 | 50 |
| RESIN | 10 | 10 | 10 | 10 | 10 | 10 | 10 |
| ZnO | 1,5 | 1,5 | 1,5 | 1,5 | 1,5 | 1,5 | 1,5 |
| SULPHUR | 2,8 | 2,8 | 2,8 | 2,8 | 2,8 | 2,8 | 2,8 |
| ACCELERANTS | 1,5 | 1,5 | 1,5 | 1,5 | 1,5 | 1,5 | 1,5 |
| SURFACTANT (a) | 2,0 | 2,0 | 2,0 | 2,0 | 2,0 | 2,0 | 2,0 |
| ΔE | 90 | 85 | 80 | 80 | 88 | 100 | 100 |
| ADHESION (N/mm) | 1,2 | 3,8 | 4,5 | 4,1 | 3,2 | 2,8 | 2,5 |

Cl-IIR = chlorobutyl rubber; CR = chloroprene; SBR = styrene butadiene rubber; NR = natural rubber; PMA = polymethacrylate; PEMA = polyethyl methyl acrylate; ABS = acrylonitrile butadiene styrene terpolymer.

As shown clearly in Table I, the method according to the present invention provides for extremely good colourfastness, and firm adhesion of the protective layer to the relative tyre portion.

Table II shows the compositions in phr of three mixes F-H produced from respective emulsions according to the present invention; and, alongside each composition, the relative fade value ΔE and adhesion to the tyre sidewall. In mixes F-H, clay was added in increasing amounts.

TABLE II

| | F | G | H |
|---|---|---|---|
| Cl-IIR | 100 | 100 | 100 |
| CARBON BLACK | 50 | 50 | 50 |
| CLAY | 30 | 70 | 110 |
| RESIN | 10 | 10 | 10 |
| ZnO | 1,5 | 1,5 | 1,5 |
| SULPHUR | 2,8 | 2,8 | 2,8 |
| ACCELERANTS | 1,5 | 1,5 | 1.5 |
| SURFACTANT (b) | 2,0 | 2,0 | 2,0 |
| ΔE | 92 | 95 | 97 |
| ADHESION (N/mm) | 3,0 | 3,5 | 4.2 |

As shown clearly in Table II, in this case, too, the method according to the invention provides for effectively colouring tyres in terms of colourfastness and adhesion to the tyre.

The fillers used in the protective layer according to the present invention preferably comprise mineral particles of 0.2 to 2 μm diameter and 5 to 30,000 aspect ratio.

The fillers are preferably in the group comprising kaolin, clay, mica, feldspar, silica, graphite, bentonite, alumina and vermiculite.

The method according to the present invention is definitely cheaper than known methods. Producing a mix from an aqueous emulsion, as opposed to using a Banbury mixer, greatly reduces energy consumption, while at the same time effectively dispersing the emulsion components, regardless of type.

The method according to the present invention also provides for colouring the tyre with only very thin layers of additional material, which have a negligible effect on rolling resistance. The protective layer, in fact, being derived from an aqueous emulsion and made from a highly impermeable mix, can be made as thin as 0.001 to 0.5 mm.

As stated, the method according to the present invention applies to both green and cured tyres.

In a preferred embodiment of the present invention for colouring cured tyres, the part of the tyre for colouring undergoes a preliminary laser, e.g. $CO_2$ laser, engraving stage to form a groove pattern, onto which the protective layer and coloured rubber layer are deposited to fasten them, and so more firmly secure the colouring, to the tyre. That is, in addition to chemical adhesion of the protective layer to the tyre surface, this mechanical fastening also assists in securing the colouring the tyre.

The method according to the present invention preferably comprises a finishing stage, in which the coloured part is laser processed to produce geometric and decorative effects designed to mask wear-induced fading of the rubber.

## Claims

1.    A method of colouring portions of a tyre; said method comprising the steps of :

- forming a impermeable protective layer by depositing an aqueous emulsion on a part of the tyre to be coloured; and
- depositing a coloured layer on said protective layer;

said method being **characterized in that** said aqueous emulsion comprises at least a cross-linkable polymer base, and a surfactant of molecular formula (I)

$$(R_1CONR_2CHR_3COO^-)nX^{n+} \qquad (I)$$

where :

$R_1$ is an aliphatic group $C_6$-$C_{23}$,
$R_2$ is H or an aliphatic group $C_1$-$C_8$,
$R_3$ is H or an aliphatic or aromatic group $C_1$-$C_8$,
X is a metal cation and
n is an integer of 1 to 3.

2.    A method as claimed in Claim 1, **characterized in that** the aliphatic group $R_1$ comprises a double bond.

3.    A method as claimed in Claim 1 or 2, **characterized in that** $X^{n+}$ is $Na^+$.

4.    A method as claimed in one of the foregoing Claims, **characterized in that** the surfactant has a molecular formula in the group consisting of :

$$CH_3(CH_2)_7CHCH(CH_2)_7CONHCH_2COO^- X^+$$

$$CH_2CH(CH_2)_8CONHCH_2COO^- X^+$$

5.    A method as claimed in one of the foregoing Claims, **characterized in that** said aqueous emulsion comprises a mineral filler comprising particles of 0.2 to 2 μm diameter and 5 to 30,000 aspect ratio.

6.    A method as claimed in Claim 5, **characterized in that** said mineral filler is in the group consisting of kaolin, clay, mica, feldspar, silica, graphite, bentonite, alumina, and vermiculite.

7. A method as claimed in one of the foregoing Claims, **characterized in that** the cross-linkable polymer base comprises at least a polymer with a Tg of over 0°C.

8. A method as claimed in one of the foregoing Claims, **characterized in that** said coloured layer is made of rubber.

9. A method as claimed in Claim 8, **characterized in that** said coloured layer comprises, in sequence, a first adhesive sublayer which contacts the protective layer; a second barrier sublayer; and a third sublayer of coloured rubber.

10. A method as claimed in one of the foregoing Claims, **characterized by** comprising a preliminary engraving step, in which said part of the tyre to be coloured is laser engraved; said preliminary engraving step forming a pattern of grooves on which to deposit said protective layer.

11. A method as claimed in one of the foregoing Claims, **characterized by** comprising a finishing step, in which the coloured portion is laser processed.

12. A tyre, **characterized by** comprising a coloured portion formed as claimed in one of the foregoing Claims.

**Patentansprüche**

1. Verfahren zum Färben von Abschnitten eines Reifens; wobei das Verfahren die folgenden Schritte umfasst:

   - Bilden einer undurchlässigen Schutzschicht durch Auftragen einer wässrigen Emulsion auf einen Teil des zu färbenden Reifens; und
   - Auftragen einer farbigen Schicht auf die Schutzschicht;

   wobei das Verfahren **dadurch gekennzeichnet ist, dass** die wässrige Emulsion mindestens eine vernetzbare Polymerbasis und ein Tensid der Molekularformel (I) umfasst

$$(R_1CONR_2CHR_3COO^-)n\ X^{n+} \qquad (I)$$

   worin :

   $R_1$ eine aliphatische Gruppe $C_6$-$C_{23}$ ist,
   $R_2$ H oder eine aliphatische Gruppe $C_1$-$C_8$ ist,
   $R_3$ H oder eine aliphatische oder aromatische Gruppe $C_1$-$C_8$ ist,
   X ein Metallkation ist und
   n eine ganze Zahl von 1 bis 3 ist.

2. Verfahren nach Anspruch 1, **dadurch gekennzeichnet, dass** die aliphatische Gruppe $R_1$ eine Doppelbindung umfasst.

3. Verfahren nach Anspruch 1 oder 2, **dadurch gekennzeichnet, dass** $X^{n+}$ $Na^+$ ist.

4. Verfahren nach einem der vorstehenden Ansprüche, **dadurch gekennzeichnet, dass** das Tensid eine Molekularformel aufweist aus der Gruppe bestehend aus :

$$CH_3(CH_2)_7CHCH(CH_2)_7CONHCH_2COO^-\ X^+$$

$$CH_2CH(CH_2)_8CONHCH_2COO^-\ X^+$$

5. Verfahren nach einem der vorstehenden Ansprüche, **dadurch gekennzeichnet, dass** die wässrige Emulsion einen Mineralfüllstoff umfasst, umfassend Teilchen von 0,2 bis 2 $\mu$m Durchmesser und einem Querschnittsverhältnis von 5 bis 30.000.

6. Verfahren nach Anspruch 5, **dadurch gekennzeichnet, dass** der Mineralfüllstoff in der Gruppe ist bestehend aus Kaolin, Lehm, Glimmer, Feldspat, Kieselerde, Graphit, Bentonit, Tonerde und Vermiculit.

**7.** Verfahren nach einem der vorstehenden Ansprüche, **dadurch gekennzeichnet, dass** die vernetzbare Polymerbasis mindestens ein Polymer mit einer Tg von über 0°C umfasst.

**8.** Verfahren nach einem der vorstehenden Ansprüche, **dadurch gekennzeichnet, dass** die gefärbte Schicht aus Gummi gefertigt ist.

**9.** Verfahren nach Anspruch 8, **dadurch gekennzeichnet, dass** die gefärbte Schicht nacheinander eine erste Haftmittel-Teilschicht, welche mit der Schutzschicht in Kontakt ist; eine zweite Barrieren-Teilschicht; und eine dritte Teilschicht aus gefärbtem Gummi umfasst.

**10.** Verfahren nach einem der vorstehenden Ansprüche, **dadurch gekennzeichnet, dass** es einen vorläufigen Gravurschritt umfasst, in welchem der Teil des zu färbenden Reifens lasergraviert wird; wobei der vorläufige Gravurschritt ein Muster von Rillen bildet, auf welchem die Schutzschicht aufgetragen wird.

**11.** Verfahren nach einem der vorstehenden Ansprüche, **dadurch gekennzeichnet, dass** es einen Endbearbeitungsschritt umfasst, in welchem der gefärbte Abschnitt laserbearbeitet wird.

**12.** Reifen, **gekennzeichnet durch** das Umfassen eines nach einem der vorstehenden Ansprüche gebildeten gefärbten Abschnitts.

## Revendications

**1.** Procédé de coloration de parties d'un pneumatique; ledit procédé comprenant les étapes de

- formation d'une couche protectrice imperméable par dépôt d'une émulsion aqueuse sur une partie du pneumatique devant être colorée ; et
- dépôt d'une couche colorée sur ladite couche protectrice ;

ledit procédé étant **caractérisé en ce que** ladite émulsion aqueuse comprend au moins une base polymère réticulable, et un tensioactif de formule moléculaire (I)

$$(R_1CONR_2CHR_3COO^-)n\ X^{n+} \qquad (I)$$

où :

$R_1$ est un groupe aliphatique de $C_6$ à $C_{23}$,
$R_2$ est H ou un groupe aliphatique de $C_1$ à $C_8$,
$R_3$ est H ou un groupe aliphatique ou aromatique de $C_1$ à $C_8$,
$X$ est un cation métallique et
$n$ est un nombre entier de 1 à 3.

**2.** Procédé selon la revendication 1, **caractérisé en ce que** le groupe aliphatique $R_1$ comprend une double liaison.

**3.** Procédé selon la revendication 1 ou 2, **caractérisé en ce que** $X^{n+}$ est $Na^+$.

**4.** Procédé selon l'une des revendications précédentes, **caractérisé en ce que** le tensioactif a une formule moléculaire dans le groupe consistant en :

$$CH_3(CH_2)_7CHCH(CH_2)_7CONHCH_2COO^-\ X^+$$

$$CH_2CH(CH_2)_8CONHCH_2COO^-\ X^+$$

**5.** Procédé selon l'une des revendications précédentes, **caractérisé en ce que** ladite émulsion aqueuse comprend une charge minérale comprenant des particules de 0,2 à 2 $\mu$m de diamètre et un rapport d'aspect de 5 à 30 000.

**6.** Procédé selon la revendication 5, **caractérisé en ce que** ladite charge minérale est dans le groupe consistant en le kaolin, l'argile, le mica, le feldspath, la silice, le graphite, la bentonite, l'alumine et la vermiculite.

**7.** Procédé selon l'une des revendications précédentes, caractérisé en que la base polymère réticulable comprend au moins un polymère avec une Tv supérieure à 0°C.

**8.** Procédé selon l'une des revendications précédentes, **caractérisé en ce que** ladite couche colorée est constituée de caoutchouc.

**9.** Procédé selon la revendication 8, **caractérisé en ce que** ladite couche colorée comprend, en séquence, une première sous-couche adhésive qui entre en contact avec la couche protectrice ; une deuxième sous-couche barrière ; et une troisième sous-couche de caoutchouc coloré.

**10.** Procédé selon l'une des revendications précédentes, **caractérisé en ce qu'**il comprend une étape préliminaire de gravure, dans laquelle ladite partie du pneumatique devant être colorée est gravée au laser ; ladite étape préliminaire de gravure formant un motif de rainures sur lequel ladite couche protectrice est déposée.

**11.** Procédé selon l'une des revendications précédentes, **caractérisé en ce qu'**il comprend une étape de finition, dans laquelle la partie colorée est traitée au laser.

**12.** Pneumatique, **caractérisé en ce qu'**il comprend une partie colorée formée selon l'une des revendications précédentes.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6030676 A

- EP 2222776 B1